# EUROPEAN PATENT APPLICATION

(11) **EP 1 229 384 A1**
(43) Date of publication of application: **07.08.2002**
(21) Application number: 02356003.0
(22) Date of filing: 09.01.2002
(51) Int. Cl.: G03C 5/395, B01D 61/14, C02F 1/44

(54) **Method of recycling wash-water resulting from film treatment**

(30) Priority: 02.02.2001 FR 0101379
(71) Applicant: EASTMAN KODAK COMPANY, Rochester, New York 14650 (US)
(72) Inventor: Martin, Didier Jean, Kodak Industrie, 71102 Chalon sur Saone Cédex (FR)
(74) Representative: Honoré, Anne-Claire (FR)

(57) **Abstract**

The invention relates to a method of recycling wash-water resulting from the treatment of a film provided with a carbon particles based backing layer, and especially from a washing treatment to remove the said carbon particles based backing layer. The method comprises the step of passing the wash-water through an ultrafiltration unit equipped with an electrically charged hydrophilic ultrafiltration membrane, e.g. an acrylonitrile copolymers based membrane. The method enables the recycling of the wash-water made uncolored with a high efficiency and considerable lowering of the water consumption used in this step of the processing.

## Description

The present invention relates to the treatment of films comprising a carbon particles based backing layer, and in particular the recycling of wash-water resulting from passing such a film through a wash-tank to remove the said backing layer.

Some films, and especially cine films, have antihalation protection in the form of a removable backing layer, comprising a first layer containing carbon particles and a second wax layer. The said first layer is obtained by coating a dispersion, in solvent medium, of carbon particles in a soluble binder in an alkaline medium, cellulose acetophthalate. After having played its antihalation protection part, the backing layer is removed, after passing through a prebath in which it is sufficiently softened, by rinsing in a first wash-tank, before development of the film. The rinsing device generally uses water jets whose action can be combined with the action of brushing rollers. The flow rate of these water jets is high (100 l/h to 150 l/h), which causes high water consumption in this treatment step. In addition, the wash-water carries off the particles it is charged with, especially particles of carbon, cellulose acetophthalate or particles of wax. This charged water has high turbidity, a pH more than 8 and a pink to brown coloring according to the seasoning. Up to now, this wash-water is not usually treated, and is discharged as it is. Whereas, new standards in particular require reduced water consumption for photographic processing and prohibit the discharge of waste water directly into the drains without prior treatment, such as pH adjustment and filtering. Furthermore, most of the carbon particles have to have been removed in order to reuse the wash-water with no impact on the film's sensitometric characteristics. This removal of the carbon particles must be carried out with high efficiency and without damaging the filtering material used.

The present invention provides a treatment method to answer the above-mentioned problems and enable the recycling of the wash-water charged especially with carbon particles with high efficiency.

The present invention provides further a treatment method to enable water consumption to be greatly reduced and to obtain uncolored recycled water free of carbon particles, dyes and polymeric material, which can be used in the treatment process without harming the qualities of the processed film.

The present invention is a method of recycling wash-waters resulting from film processing especially comprising treatment in a prebath followed by washing to remove the carbon particles based backing layer, wherein said method comprises the step of passing said wash-water through an ultrafiltration unit equipped with a hydrophilic ultrafiltration membrane whose surface is electrically charged, wherein a permeate is obtained, and wash-water free of at least said carbon particles is obtained in said permeate. The electrically charged hydrophilic ultrafiltration membranes used in the method according to the invention are membranes having a wet contact angle less than 70° and preferably between 10° and 60°.

In a preferred embodiment, said hydrophilic ultrafiltration membrane has a positively charged membrane surface to remove the dyes as well as the carbon particles.

The method according to the invention enables the removal from wash-water of the carbon particles in particular; the water can then be recycled with high efficiency.

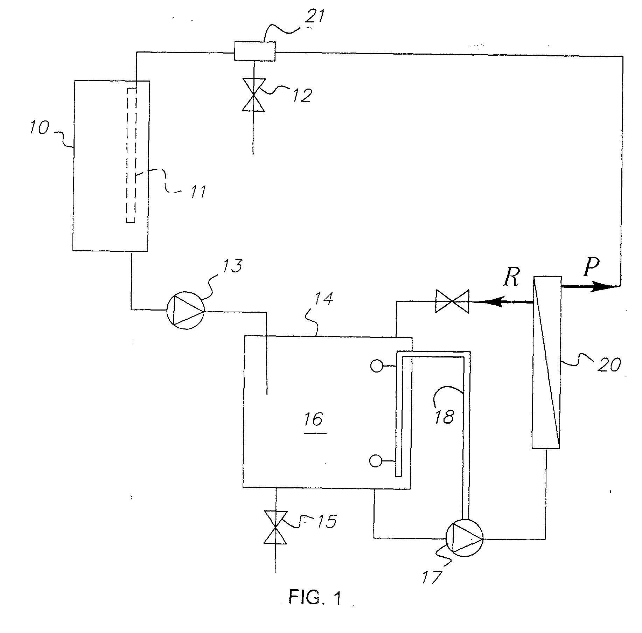

Figure 1 represents a particular embodiment of the method according to the present invention.

The method according to the invention can be implemented especially during the processing of Eastman Color Negative® and Eastman Color Positive® films supplied by Eastman Kodak. These films, intended for the cinema, have a backing layer containing carbon particles, this layer being removable by passing through a prebath and then washing implemented at the start of the development process.

In the present invention, ultrafiltration is preferably carried out using a tangential ultrafiltration unit, in which the solution is pumped at high speed along the ultrafiltration membrane. However, it is possible to use a frontal ultrafiltration unit, in which the solution is pumped under high pressure, perpendicularly to the membrane. The filtering pressure is adjusted to obtain the best compromise in terms of filtrate flow.

The hydrophilic membranes used in the method according to the invention are based on a hydrophilic polymer, such as the acrylonitrile, acrylic acid, and cellulose acetate based polymers and copolymers. According to the invention, they must also have surface charges due to the presence, on the membrane surface, of electrically charged functional radicals already present or introduced by functionalized monomer copolymerization or by surface grafting. Hydrophilic ultrafiltration membranes having a negatively charged membrane surface comprise hydrophilic chains having a negatively charged radical, such as sulfonate, carboxylate or phosphate. Hydrophilic ultrafiltration membranes having a positively charged membrane surface comprise hydrophilic chains having a positively charged radical, such as ammonium or substituted amine.

Analysis of the wash-water shows that the particles contained in this wash-water, in relation to the treatment of Eastman Kodak Negative® products, have a size between 0.2 µm and 20 µm, the average particle size being 0.41 µm.

Advantageously in the invention's method electrically charged hydrophilic ultrafiltration membranes are used having a cut-off between 40 and 50kD.

These ultrafiltration membranes enable a high permeate flow for a relatively low cut-off. Thus, polymeric materials, such as wax or cellulose acetophthalate particles, present in the backing layer are also removed from the wash-water.

To remove the carbon particles according to the invention, the hydrophilic ultrafiltration membrane can have a positively or negatively charged membrane surface as said above.

In a particularly advantageous method, the hydrophilic membrane has a positively charged membrane surface, for which the carbon particles have weak adhesion. This embodiment of the method according the invention enables the holding and removal of all the carbon particles while ensuring the ultrafiltration membrane has a low tendency to clog and improved lifetime for the equipment.

In addition, the hydrophilic ultrafiltration membrane having a positively charged membrane surface adsorbs at its surface the dyes present in the wash-water. This embodiment of the method of the invention enables the wash-water to be completely uncolored. In this way, any problems of residual color are eliminated. The ultrafiltration membrane, after carrying out the method according to the invention, is then colored. The initial state of the membrane can be recovered by removing the adsorbed dyes thanks to a simple rinsing using IN hydrochloric acid, with no impact on the performance of the ultrafiltration membrane.

According to an embodiment of the method of the present invention, prefiltering can be carried out, for instance by filtration through a polypropylene-based filter, before the ultrafiltration treatment to remove the larger sized particles.

One example of the embodiment of the method according to the invention is illustrated in Figure 1, showing the ultrafiltration unit functioning in closed loop. The film to be processed (not shown) is introduced into the processing installation that comprises, before the development step, a prebath (not shown) in which the film runs to soften the backing layer, and a first wash-tank 10 in which the backing layer is removed by rinsing using water jets created by the nozzles 11. The overflow of the first wash-tank 10 is sent through a transfer pump 13 into an intermediate tank 14 equipped with a bleed valve 15. The wash-water 16 contained in the intermediate tank 14 is sent back through a low pressure (1 to 10 bar) pump 17, controlled by a servo system 18, into the ultrafiltration unit 20 equipped with a hydrophilic membrane having surface charges. After passing through the unit 20, a retentate R is recovered at the outlet that is sent to the intermediate tank 14, and a permeate P that is the recycled wash-water used to resupply the first wash-tank 10 with water. The installation provides a mixer 21 that enables fresh water to be added to the recycled wash-water resulting from the ultrafiltration unit 20 by opening valve 12. However, the method according to the invention enables 100% reuse of the recycled wash-water without the extra addition of fresh water.

Thanks to the method according to the invention, the wash-water once treated is uncolored and completely free of carbon particles and polymeric material present in the backing layer, such as wax and cellulose acetophthalate. The wash-water is then recycled, with high efficiency, in the first wash-tank to again remove the film's backing layer, without the need to add fresh water. The method according to the invention thus enables water consumption to be reduced significantly. Recycling does not harm the properties of the film obtained, because no modification of the sensitometric properties or any physical defect of the film are observed.

The invention is illustrated in detail in the following examples.

### EXAMPLE 1 (comparative)

A sample was taken from the wash-water resulting from the treatment to remove the backing layer of an Eastman Color Negative® film marketed by Eastman Kodak. A microfiltration treatment was carried out and then the resulting permeate was treated by ultrafiltration on a ceramic-based ultrafiltration membrane (KERASEP® membrane supplied by Rhodia Orelis), having a molecular weight cut-off of 15 kD. The parameters of these two treatments are given in Table I. The filtering pressures were adjusted according to the volume treated to obtain the best compromise in terms of permeate flow.

After having applied each of the treatments in succession, the transmittance of the resulting permeate was measured by spectrometry at a wavelength λ of 265 nm. The higher the transmittance, the fewer carbon particles remain in the resulting permeate. Also the color of the resulting permeate was noted. The results are given in Table II.

**Table I**

| Treatment | Pressure (bar) | Permeate flow (1/hm²) |
|---|---|---|
| Microfiltration | 4.3 | 464 |
| Ultrafiltration | 2.8 | 167 |

**Table II**

| Treatment | Transmittance (%) | Permeate color |
|---|---|---|
| Start | 28 | Black |
| Microfiltration | 75 | Yellowish |
| Ultrafiltration | 89 | Yellowish |

Table II shows that the ceramic-based ultrafiltration membrane enables the retention of a high number of carbon particles but that the removal of these carbon particles is not complete. In addition, Table I shows that the ceramic-based ultrafiltration membrane causes a very significant reduction of permeate flow due to the fouling of the pores, even after the microfiltration step. A deposit of black particles is observed inside the channels of the ceramic membrane. Thus, such a ceramic membrane cannot be used because of this high plugging propensity.

### EXAMPLE 2

A sample was taken from the wash-water resulting from the treatment to remove the backing layer of an Eastman Color Negative® film marketed by Eastman Kodak. An ultrafiltration treatment was carried out this time using various organic membranes whose characteristics and treatment parameters are detailed in Table III. These membranes are supplied by Rhodia Orelis.

Their hydrophilic character was assessed by measuring their wet contact angle by the Wilhemy blade method. This method is based on the measurement of the force needed to pull off from a liquid a thin plate of a sample suspended from one of the arms of a balance and submerged in the liquid. The liquid is maintained at 24°C. First, the surface tension of the liquid γ is measured using a blade of filter paper for which θ = 0. The wet contact angle is defined by the following formula :cos θ = ΔW/Pe.γ
where
ΔW is the weight variation of the plate at the moment of its contact with the liquid, and
Pe is the perimeter of the plate.
The hydrophilic character increases with the wet contact angle value.
The membranes based on acrylonitrile copolymers used for this example have a negatively charged membrane surface for membranes 3038 and 3042 and positively for membrane 3050. Membrane 3038, in absolute value, has a surface charge close to that of membrane 3050.

A Berghof® unit with 400 ml capacity (equipment supplied by Prolabo) was used as front ultrafiltration unit, taking various ultrafiltration membranes of 76 mm diameter. The Berghof® unit, provided with a magnetic stirrer, was loaded with 250 ml of wash-water. The filtering pressures were adjusted to obtain the best compromise in terms of permeate flow.

The permeate flow was measured. The results are given in Table III.

**Table III**

| Membrane | MW Cut-off kD | Electric charge | Wet contact angle | Pressure (bar) | Permeate flow (1/hm²) |
|---|---|---|---|---|---|
| PVDF⁽¹⁾-3065 | 30-40 | 0 | | 10 | 85 |
| PES⁽²⁾-3028 | 10 | 0 | 74 | 18 | 56 |
| PES-3028 | 100 | 0 | 81.9 | 6 | 141 |
| A⁽³⁾-3038 | 40 | <0 | 50.3 | 5 | 334 |
| A⁽³⁾-3042 | 50 | <0 | 16.8 | 7 | 560 |
| A⁽³⁾-3050 | 50 | >0 | 50.6 | 5 | 380 |

| | | | | | |
|---|---|---|---|---|---|
| (1) = Polyvinylidene fluoride (PVDF) | | | | | |
| (2) = Polyethersulphone (PES) | | | | | |
| (3) = Acrylonitrile copolymers (A) | | | | | |

All the tested ultrafiltration membranes enable complete removal of the carbon particles because no particle is detected in the permeate even with a high rate of recovery (more than 90% volume).

Only acrylonitrile copolymer based hydrophilic ultrafiltration membranes having an electrically charged membrane surface enable very high flows to be obtained with a low pressure and a relatively low molecular weight cut-off. As the wet contact angles vary between 10° and 60°, these acrylonitrile copolymer based membranes have a hydrophilic character, which explains the higher permeate flows achieved. For a similar charged level (in absolute value), a similar wet contact angle is obtained enabling similar permeate flows to be produced for a similar molecular weight cut-off Further, the lower the wet contact angle, the higher is the permeate flow.

For neutral membranes based on PVDF or PES, wet contact angles of more than 70° show the hydrophobic character of these membranes. This causes less affinity with the water, leading to the observation of lower permeate flow, as this flow is directly linked to the cut-off; a high flow requires a high cut-off (more than 100 kD), which means a reduction of the retention of the polymeric material (wax, cellulose acetophthalate) dumped in the wash-water. Therefore these PVDF and PES based membranes are not interesting for the treatment of wash-water.

The separation power of the various ultrafiltration membranes was assessed by noting the color of the permeate and by measuring its COD (Chemical Oxygen Demand) according to standard AFNOR NF T90-101. The results are given in Table IV.

Also measured was the adhesion of the carbon particles to the membrane surface by taking a membrane that has been used for the ultrafiltration of a sample of 100 ml of wash-water in a Berghof® unit according to the invention, with a recovery rate of at least 97%. Adhesion of the particles was determined by subjecting the membrane to three experiments:
- Test 1: by simple rinsing: the used membrane is immersed in 500 ml of tap water at ambient temperature with reduced stirring (less than 50 rpm). This test is assessed visually according to the following marking scale:
   1= less than 10% of carbon particles removed from the membrane surface
   2= less than 50% of carbon particles removed from the membrane surface
   3= at least 90% of carbon particles removed from the membrane surface
   4= more than 95% of carbon particles removed from the membrane surface.
- Test 2: by rinsing with water stream: the used membrane, previously submitted to the first rinsing test, is put through a water stream (about 1 1/min at a pressure of 2 bar) at a 10 cm length from the water outlet. This test is assessed visually according to the following marking scale:
   1= no change of the number of carbon particles removed compared with the first rinsing test
   2= less than 50% of carbon particles removed after the two rinsing tests
   3= at least 95% of the initial number of carbon particles removed from the membrane surface.
- Test 3: by rinsing with water stream and by friction: after Test 2, the membrane is held under the water stream and mechanical cleaning is performed by manual friction. This test is assessed visually according to the following marking scale:
   1= at least 99% of the initial number of carbon particles removed from the membrane surface after manual friction
   2= at least 95% of the initial number of carbon particles removed without manual friction.

The results of these adhesion tests are given in Table V.

**Table IV**

| Membrane | MW Cut-off kD | Electric charge | Color | COD ppm |
|---|---|---|---|---|
| Start | ---- | ---- | Black | 65 |
| PVDF-3065 | 30-40 | 0 | Yellowish | 58 |
| PES-3028 | 10 | 0 | Yellowish | 53 |
| PES-3028 | 100 | 0 | Yellowish | 38 |
| A-3038 | 40 | <0 | Yellowish | 45 |
| A-3042 | 50 | <0 | Yellowish | 34 |
| A-3050 | 50 | >0 | Uncolored | 32 |

**Table V**

| Membrane | MW Cut-off kD | Electric charge | Adhesion of carbon particles | | |
|---|---|---|---|---|---|
| | | | Test 1 | Test 2 | Test 3 |
| PVDF-3065 | 30-40 | 0 1 1 | | | 1 |
| PES-3028 | 100 | 0 | 1 | 1 | 1 |
| A-3038 | 40 | <0 | 3 | 3 | 2 |
| A-3042 | 50 | <0 | 4 | 3 | 2 |
| A-3050 | 50 | >0 | 3 | 3 | 2 |

Table IV shows unexpectedly that the acrylonitrile copolymer based hydrophilic ultrafiltration membranes having an electrically charged membrane surface have the best separation power and enable the complete removal of the carbon particles to be obtained with a relatively low cut-off. In this way any physical deterioration due to an accumulation of compounds dumped by the film is suppressed. In addition, the acrylonitrile copolymer based ultrafiltration membrane 3050 with a positive surface charge enables uncolored wash-water to be obtained because the dyes adsorb onto its surface. Thus this membrane enables problems of residual color to be eliminated. The positively charged acrylonitrile copolymer based hydrophilic ultrafiltration membrane had a yellowish coloring after its use due to the accumulation of dyes present in the treated wash-water. The initial color of the membrane was restored by rinsing with a solution of 1N HCl for 30 minutes.

Table V shows well the advantages of hydrophilic membranes having a surface charge compared with neutral hydrophobic membranes. With hydrophobic membranes, a very significant deposit of carbon particles was observed: this deposit not being easily removable by a simple rinsing in water. It is necessary to rub manually to achieve correct cleaning of the surface of the hydrophobic membranes. For hydrophilic membranes, simple rinsing in water was sufficient, which makes maintenance very easy.

### EXAMPLE 3

A processing device for Eastman Color Negative® films supplied by Eastman Kodak was used, in which were processed an equivalent quantity of Eastman Kodak products and other products comprising carbon particles having an average size similar to the Eastman Kodak products (0.41 to 0.42 µm). However, the carbon particles present in the wash-water of the other products were larger than those resulting from the processing of Eastman Kodak products.

A sample was taken from the wash-water resulting from the treatment to remove the backing layer of these films and it was treated under the conditions of Example 2. Only the acrylonitrile copolymer based hydrophilic ultrafiltration membranes were tested. The tests were repeated for two cycles, without rinsing the membranes between the two cycles, to detect more easily potential membrane fouling.

The permeate flows were measured for each cycle and their variation between two cycles was calculated. The results are given in Table VI.

**Table VI**

| Membrane | Pressure (bar) | Permeate flow (1/hm²) | Variation % |
|---|---|---|---|
| A-3038 / cycle 1 | 5 | 504 | --- |
| A-3038 / cycle 2 | 5 | 435 | 14 |
| A-3042 / cycle 1 | 7 | 862 | --- |
| A-3042 / cycle 2 | 7 | 814 | 6 |
| A-3050 / cycle 1 | 5 | 564 | --- |
| A-3050 / cycle 2 | 5 | 562 | 0 |

Acrylonitrile copolymer based hydrophilic ultrafiltration membranes 3042 and 3050 have good reproducibility of the permeate flow and a low propensity to fouling phenomena. The increased permeate flow compared with Example 2 is due to the increase in size of the carbon particles resulting from the mixture of films of various origins.

### EXAMPLE 4

In a processing device for Eastman Color Negative® films processing only ECN® products a sample was taken from the wash-water resulting from the treatment to remove the backing layer of an ECN® film. This sample was treated under the conditions of Example 2 in a Berghof® unit as previously described. Only acrylonitrile copolymer based ultrafiltration membranes 3042 (50 kD, charge <0) and 3050 (50 kD, charge >0) were tested to assess the influence of the pressure on the permeate flow. The results are given in Table VII.

**Table VII**

| Membrane | Pressure (bar) | Permeate flow (1/hm²) |
|---|---|---|
| A-3042 / cycle 1 | 5 | 414 |
| A-3042 / cycle 2 | 7 | 709 |
| A-3050 / cycle 1 | 5 | 487 |
| A-3050 / cycle 2 | 7 | 440 |

Generally, the higher the pressure, the higher is the permeate flow. For the acrylonitrile based membrane 3050, the permeate flow seems relatively less sensitive to the pressure variations than the acrylonitrile based membrane 3042.

### EXAMPLE 5

The wash-water resulting from the treatment to remove the backing layer of an ECN® film was treated using a PLEIADE UFP 10 ultrafiltration unit supplied by Rhodia Orelis, and equipped with the acrylonitrile copolymer based membrane 3050 (16 frames flat modules developing a surface area of 1.75 m²). The ultrafiltration unit worked in closed loop with the processing device for ECN® films (see Fig 1) to enable a continuous filtering process of the wash-water recovered in the intermediate tank 14 to which the overflow from the first wash-tank 10 is sent. To start with, the intermediate tank 14 was supplied with fresh water and pump 17 was adjusted to obtain a water flow of 3 1/min at the nozzles 11 creating the water jets to remove the backing layer. Two experiments were performed. In Test 5a, initially 50 liters of fresh water were added to the intermediate tank, for a test of 105 minutes enabling the treatment of 427 meters of film. In Test 5b, initially 100 liters of fresh water were added to the intermediate tank. To start with, the fresh water went through the ultrafiltration unit to balance the membrane and then went into the first wash-tank 10 through the nozzles 11. Then 100% of the recycled water was reused without the addition of extra fresh water during the tests.

The pressure of the retentate at the outlet of the ultrafiltration unit was measured as well as of the permeate flow, i.e. the water flow that is to supply the first wash-tank. The results are given in Table VIII.

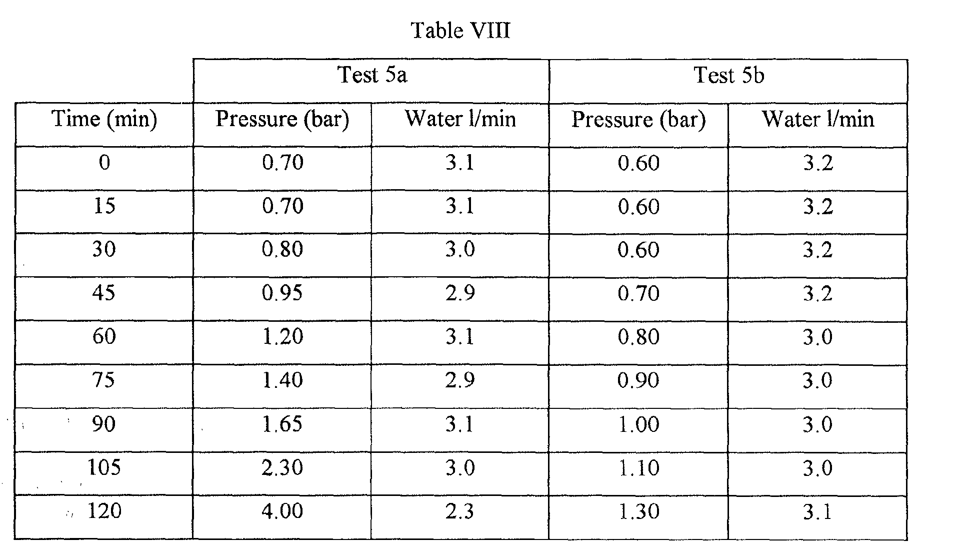

The best filtering conditions are obtained with a volume of 100 liters of fresh water added at the start into the intermediate tank. A large volume of fresh water at the start enables the overflow of the first wash-tank contained in the intermediate tank to be diluted and thus to reduce the pressure of the retentate and at the membrane (1.3 bar instead of 4 bar), and thus to reduce the propensity to the membrane fouling.

The processing conditions are described in the "Manual for Processing Eastman Kodak Motion Picture Films, Process H 24", EKC, 1990, for processing ECN® films. Sensitometric measurements were carried out for two types of ECN® films, i.e. film 5274 VISION 200T and film 5289 VISION 800T. The sensitometry was measured at the start of the process (just after having supplied the first wash-tank with fresh water) and at the end of 105 minutes corresponding to the treatment of 374 meters of film, the wash-water resulting from the first wash-tank having been treated according to the invention and recycled 100% into the first wash-tank.

The results are given in Table IX.

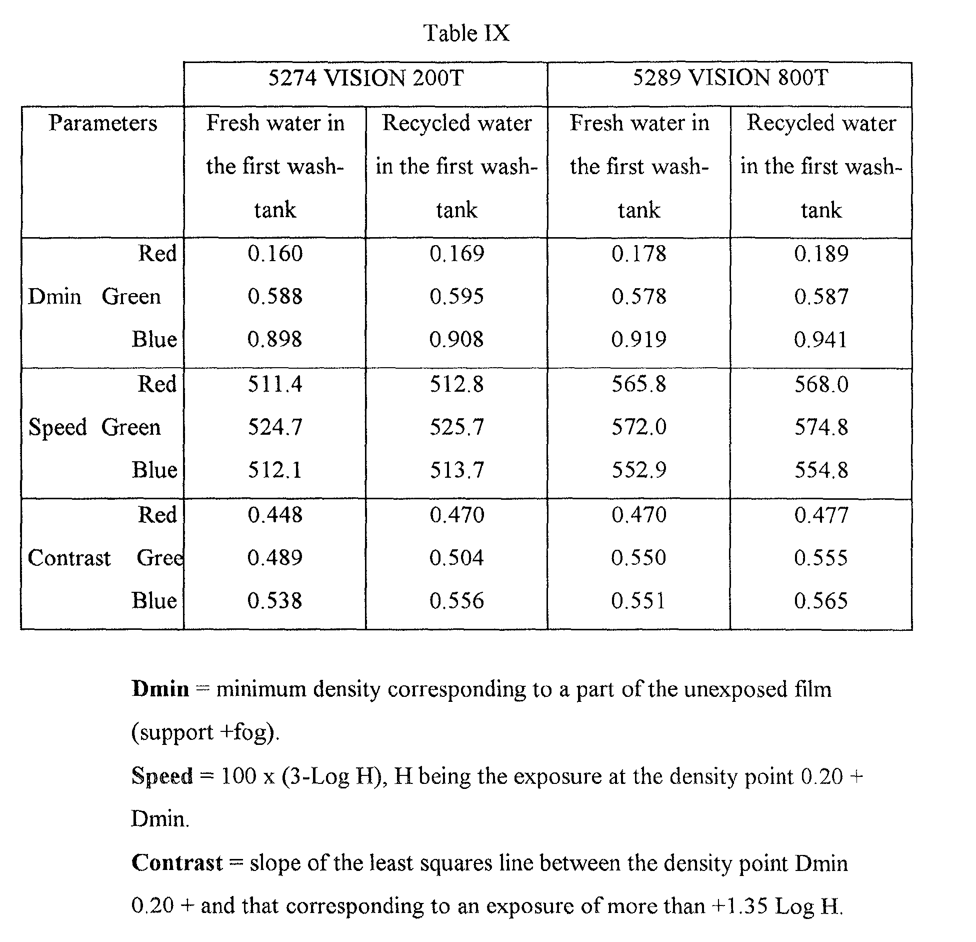

Table IX clearly shows that for the developed ECN® films no significant sensitometric difference or any physical defect is observed. The method according to the invention enables water consumption to be reduced at least from 24 l/m² to 6.7 l/m² for the treatment to remove the backing layer. Similar results were observed with Test 5a.

## Claims

1. A method of recycling wash-water resulting from the treatment of a film provided with a carbon particles based backing layer, said treatment comprising a washing treatment to remove said carbon particles based backing layer, wherein said method comprises the step of passing said wash-water through an ultrafiltration unit equipped with a hydrophilic ultrafiltration membrane whose surface is electrically charged, wherein a permeate is obtained, and wash-water free of at least said carbon particles is obtained in said permeate.

2. The method of Claim 1, comprising the step of recovering wash-water from the permeate and recycling it for said washing treatment.

3. The method of Claim 1, wherein said ultrafiltration membrane has a wet contact angle less than 70°.

4. The method of Claim 3, wherein said ultrafiltration membrane has a wet contact angle between 10° and 60°.

5. The method of Claim 3, wherein said ultrafiltration membrane is made in a hydrophilic material chosen from among the group comprising acrylonitrile, acrylic acid, and cellulose acetate based polymers and copolymers.

6. The method of Claim 1, wherein the ultrafiltration unit is a tangential ultrafiltration unit.

7. The method of Claim 1, wherein said hydrophilic ultrafiltration membrane has a positively charged membrane surface to further remove dyes.

8. The method of Claim 1, wherein said ultrafiltration membrane has a molecular weight cut-off between 40 and 50 kD.

9. The method of Claim 1, comprising further the step of cleaning said ultrafiltration membrane by rinsing using a hydrochloric acid solution.

10. The method of Claim 1, comprising the step of prefiltering the wash-water through a polypropylene based filter.
